# EUROPEAN PATENT SPECIFICATION

(11) **EP 2 786 076 B1**
(45) Date of publication and mention of the grant of the patent: **23.03.2016**
(21) Application number: 12812880.8
(22) Date of filing: 03.12.2012
(51) Int. Cl.: F24F 5/00, F28D 20/02, F24F 13/30

(54) **PHASE CHANGE MATERIAL PACK**
PHASENWECHSELMATERIAL-STAPEL
ENSEMBLE MATÉRIAU À CHANGEMENT DE PHASE

(30) Priority: 02.12.2011 GB 201120784
(43) Date of publication of application: 08.10.2014
(73) Proprietor: VKR Holding A/S, 2970 Hørsholm (DK)
(72) Inventor: Bako-Biro, Zsolt, Tilehurst Reading RG31 6RY (GB); Holloway, Mathew, Emsworth PO10 8BE (GB)
(74) Representative: Dixon, Philip Matthew
(86) International application number: PCT/EP2012/074293
(87) International publication number: WO 2013/079728

(56) References cited:
- EP-A2- 0 942 239
- WO-A1-2010/092393

## Description

### FIELD OF THE INVENTION

This invention relates to a phase change material (PCM) pack for an air conditioning system, and to an air conditioning system comprising a stack of such packs.

### BACKGROUND

Published patent applications WO 2009/101398, WO 2010/092391 and WO 2010/092393 describe phase change material packs and air conditioning arrangements using the packs. The phase change materials use the latent heat property of material to store thermal energy so that the phase change material can be frozen using cool night time air and then used to cool daytime air for air conditioning purposes, for example within domestic and commercial buildings.

It is desirable to maximise the heat transfer between phase change material packs and an air flow. The present invention, at least in preferred embodiments, seeks to address this desirability.

### BRIEF SUMMARY OF THE DISCLOSURE

In accordance with the present invention there is provided a phase change material (PCM) pack for an air conditioning system (or ventilation system). The pack comprises phase change material sealed between a first thermally conductive layer forming a first outer surface of the PCM pack and a second thermally conductive layer forming a second outer surface of the PCM pack. At least the first or second outer surface of the PCM pack takes the form of a substantially planar surface having defined therein a plurality of depressions deviating from the planar surface towards the interior of the PCM pack in a direction perpendicular to the planar surface.

Thus, in accordance with the present invention, the depressions in the outer surface of the PCM pack enhance the heat transfer between an air flow passing over the outer surface and the PCM. It has been found that vortices are generated within the depressions that enhance heat flow.

Typically, both the first and second outer surfaces of the PCM pack each take the form of a substantially planar surface having defined therein a plurality of depressions deviating from the planar surface towards the interior of the PCM pack in a direction perpendicular to the planar surface. However, depressions may be provided on only one outer surface of the pack. The other outer surface of the pack may therefore be substantially flat or may have protrusions or depressions provided thereon, which may take any other suitable shape.

In general, the PCM pack is substantially cuboidal having a length and width many times larger than its depth. In this way, the PCM pack forms a thin panel.

In embodiments of the invention, the plurality of depressions is arranged in a regular array over the outer surface. This is not essential and the depressions may be arranged substantially randomly. However, for reasons of aesthetics, effective use of the surface area of the PCM pack and air flow, a regular array is presently preferred.

The array of depressions may comprise parallel rows of depressions arranged orthogonally to the direction of fluid flow over the PCM pack, which will typically by the longitudinal (length) direction of pack. Thus, the rows of depressions may extend in the width direction of the pack. The pitch of depressions within the row may be selected to maximise heat transfer. The spacing between adjacent rows may be selected to maximise heat transfer. Adjacent rows of depressions may be staggered, for example by half the pitch of the depressions, in order to maximise the use of the surface area of the PCM pack.

The (or each) outer surface is typically provided with a large number of depressions. Thus, each outer surface of the pack provided with said depressions may comprise at least ten depressions, preferably at least 50 depressions, more preferably at least 100 depressions, more preferably 1000 depressions or more.

In order to maximise heat transfer, the depressions may occupy a substantial proportion of the outer surface of the PCM pack. Thus, the depressions may occupy more than 15% of the planar surface area of the (or each) outer surface, possibly more than 25%, preferably more than 50%, more preferably more than 75%.

In embodiments of the invention, the outer surface of the PCM pack is provided with a large number of relatively small depressions. Thus, the planar surface area of the outer surface occupied by each depression may be less than 5% of the total planar surface area of the outer surface, possibly less than 1%, or less than 0.5% or even less than 0.1%. The planar surface area of the outer surface occupied by each depression can be considered as the footprint of the depression.

In order to generate a desirable vortex, the depressions are presently preferred to be relatively shallow compared to their footprint. Thus, the maximum depth of each depression in the direction perpendicular to the planar surface of the PCM pack (the depth direction) may be less than 75% of the square root of the planar surface area of the outer surface occupied by the depression, possibly less than 50% or even less than 25%.

However, in order to be effective in generating vortices, the depressions should not be too shallow. Thus, the maximum depth of each depression in the direction perpendicular to the planar surface of the PCM pack may be greater than 10% of the square root of the planar surface area of the outer surface occupied by the depression, possibly greater than 20% or even greater than 30%.

In order that that the depressions create effective vortices, it is desirable for the cross section of each depression in a plane perpendicular to the planar surface of the pack to form a smooth curve. The curve may be circular, elliptical, hyperbolic or any other suitable shape.

The footprint of the depressions may be any suitable shape, for example elliptical or polygonal. In embodiments of the invention, the depressions have a substantially circular shape in the plane of the planar outer surface. This provides a configuration that is easy to manufacture.

Thus, in a presently preferred embodiment, the depressions are defined by a substantially spherical surface. For example, the depressions may be substantially hemispherical or may be provided by less than half a sphere.

The phase change material may comprise at least one of a salt hydrate, urea or paraffin. Other phase change materials may be used, including mixtures. In particular, organic phase change materials made from vegetable products may be used, such as the materials sold under the Pure Temp trade mark by Entropy Solutions, Inc. of Plymouth, Minnesota, USA. Particular phase change materials are mixtures of paraffin and salt hydrates such as the SP Blend manufactured by Rubitherm Gmbh of Berlin, Germany.

The salt hydrate may comprise a hydrate of sodium sulphate and/or a hydrate of calcium chloride. For example, the salt hydrate may be sodium sulphate decahydrate, calcium chloride hexahydrate, calcium chloride tetrahydrate, calcium chloride dehydrate or a mixture of two or more of these. Other suitable salt hydrates are hydrates of sodium thiosulphate, sodium acetate, disodium hydrogen phosphate or sodium carbonate or suitable mixtures of these and other salt hydrates.

The phase change material may comprise a hydrate of sodium sulphate and between 0 and 15% by weight of sodium chloride. The sodium chloride can be used to lower the melting point of the sodium sulphate hydrate to the required level. Similarly, the phase change material may comprise a hydrate of calcium chloride and between 0 and 15% by weight of potassium chloride, sodium chloride and/or ammonium chloride.

Typically, the phase change material has a melting point between -15 and 100 degrees centigrade, preferably between 15 and 40 degrees centigrade, more preferably between 20 and 30 degrees centigrade. The phase change material may be employed in a pack for refrigeration with a melting point between -5 and 15 degrees centigrade or for a heating system with a melting point in excess of 40 degrees centigrade. The minimum and maximum temperatures in the preceding ranges may be used interchangeably to define the melting point range for the phase change material.

The thermally conductive material may be a metal, such as aluminium or stainless steel, which may be provided with an anti-corrosion coating. Alternatively, the thermally conductive material may comprise a metal-plastics composite, for example aluminium-coated plastics or HDPE with an additive to increase thermal conductivity. The depressions may be formed in the thermally conductive material by moulding, pressing, machining or any other suitable process.

The invention extends to an air conditioning system comprising a plurality of the PCM packs arranged in a stack with spacing between adjacent packs to allow air flow over the outer surface of each pack. The spacing of the packs is selected to minimise the pressure drop across the stack while maximising heat transfer.

In order to generate the desired air flow through the stack, the maximum depth of each depression in the direction perpendicular to the planar surface of each PCM pack may be less than 90% of the spacing between adjacent packs, feasibly less than 75%, possibly less than 50%, possibly less than 40%, or even less than 25%. In general, the maximum depth of each depression in the direction perpendicular to the planar surface of each PCM pack is greater than 25% of the spacing between adjacent packs.

An advantage of the depressions in the PCM pack is in reducing the thickness of the pack periodically to improve conductivity and benefit the melting and freezing process.

### BRIEF DESCRIPTION OF THE DRAWINGS

Embodiments of the invention are further described hereinafter with reference to the accompanying drawings, in which:
Figure 1 shows a PCM pack according to an embodiment of the invention;
Figure 2 shows schematically an air conditioning system according to an embodiment of the invention;
Figure 3 shows in cutaway the detail of a PCM pack according to an embodiment of the invention;
Figure 4 shows the airflow over the surface of the PCM pack of Figure 3;
Figure 5 shows schematically the configuration of the PCM pack of Figure 3;
Figure 6 shows four exemplary arrangements of dimpled panels;
Figure 7 shows the heat transfer coefficient for the panels of Figure 6 at a range of flow rates;
Figure 8 shows the heat transfer coefficient for the panels of Figure 6 at a range of pressure drops; and
Figure 9is a comparison of the heat transfer coefficient for selected ones of the panels of Figure 6 at a range of pressure drops.

### DETAILED DESCRIPTION

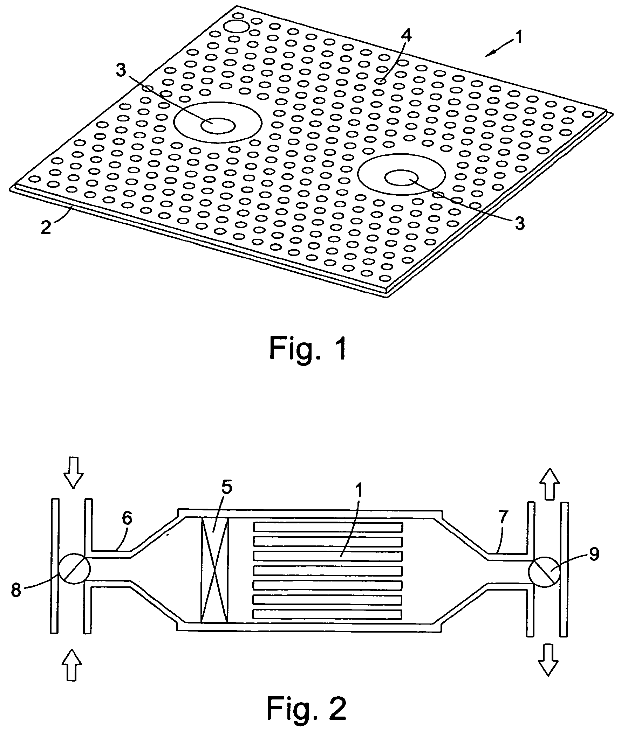

Figure 1 shows a phase change material (PCM) pack 1 according to an embodiment of the invention. The PCM pack is formed from two layers 2 of thermally conductive material sealed together at their edges to enclose the PCM. The layers of thermally conductive material are also connected at, in this embodiment, two connecting locations 3 within the footprint of the PCM pack 1. The connecting locations 3 take the form of a rivet within a depression formed in one layer 2 of thermally conductive material which rivet connects the two layers and provides mechanical stability to the PCM pack 1.

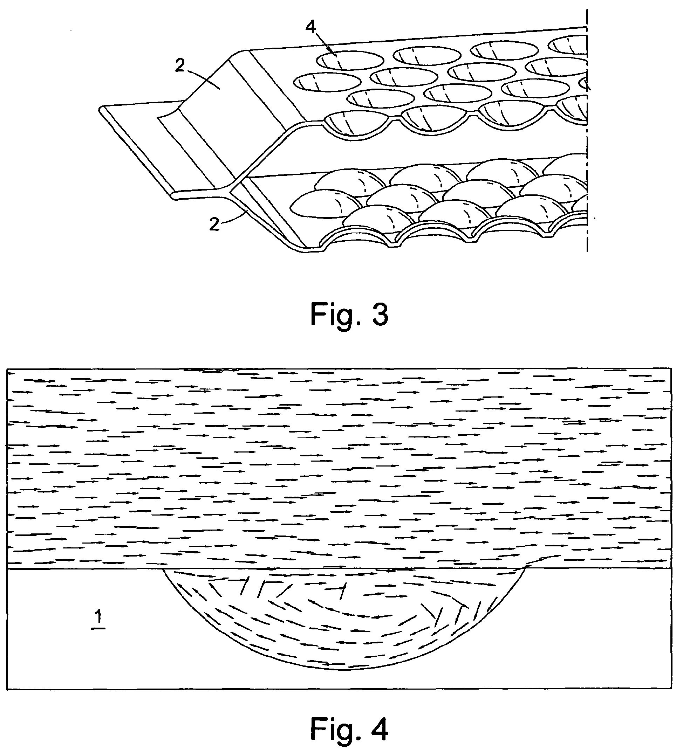

As shown in Figure 1, the surface of the PCM pack 1 is provided with a regular array of depressions 4 forming a surface texture of the PCM pack. The significance of the depressions 4 will be described in more detail with reference to the subsequent Figures. In Figure 1, the depressions 4 are shown with a substantially rectangular outline. However, the depressions 4 may be circular in outline, as shown for example in Figure 3. Other outlines are also possible, for example elliptical or polygonal.

Figure 2 shows the PCM packs 1 of Figure 1 in a simple air conditioning system. The PCM packs 1 are arranged in a stack with spacing for airflow between adjacent packs 1. A fan 5 forces air through the stack of PCM packs 1 from an air inlet 6 to an air outlet 7. An inlet valve 8 selects the source of air for the air inlet 6, which may be air from within a building or air from outside a building. Similarly, an outlet valve 9 routes the air from the air outlet 7.

The air conditioning system is configured to use cool night time air from the outside of a building to freeze the PCM in the PCM packs 1 so that during the day air can be cooled by being forced over the PCM packs 1 by the fan 5 causing heat to be transferred from the air to melt the PCM. The air inlet valve 8 allows the air to be cooled to be selected from outside air or, preferably, cooled air from within the building.

Figure 3 shows the detail of a PCM pack 1 according to an embodiment of the invention in which the depressions 4 have a circular outline and are arranged in a regular array. In this embodiment, the depressions 4 are substantially hemispherical. However, other shapes of the depressions 4 are possible, for example the depressions may be ovoid in shape. As can be seen in Figure 3, the PCM pack is provided with depressions 4 on both major surfaces of the pack 1.

Figure 4 shows the flow profile of air passing over the surface of the PCM pack 1 in the direction of the uppermost arrows in the Figure. As can be seen in Figure 4, the provision of a depression 4 in the surface of the PCM pack 1 causes a vortex to be generated in the depression 4, which has been found to increase thermal transfer between the PCM pack 1 and the passing air. This improves the efficiency of the PCM pack 1 when compared to a PCM pack having only a flat surface.

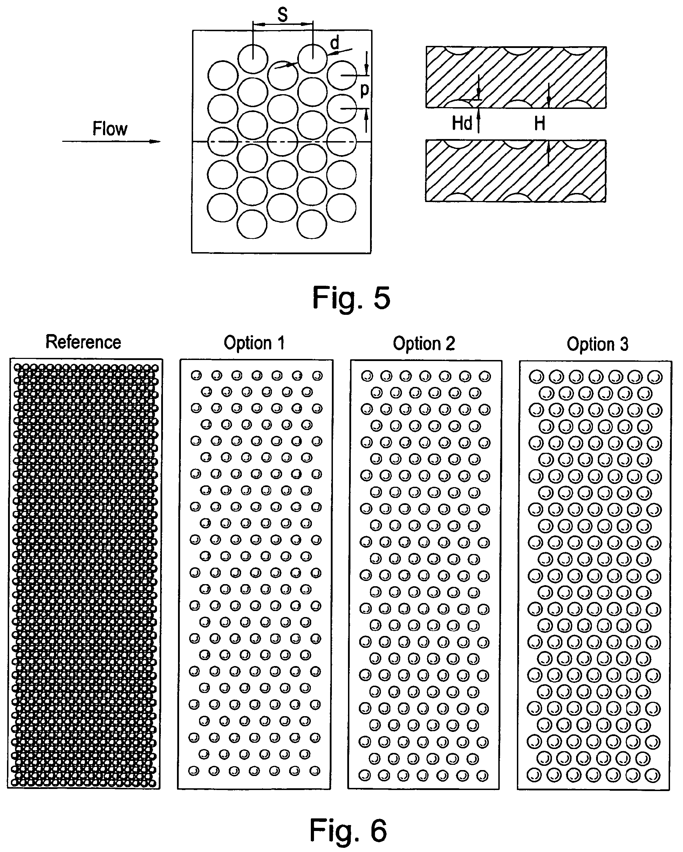

Figure 5 shows the dimensions of the arrangement of depressions 4 on the surface of the PCM pack 1. As shown in Figure 5, the substantially hemispherical depressions 4 are arranged in staggered rows orthogonal to the direction of airflow (left to right in Figure 5). The spacing between aligned rows is indicated by the parameter S. The diameter of each depression is indicated by the parameter d and the spacing of the centres of depressions in each row (pitch) is indicated by the parameter p. As shown in Figure 5, adjacent rows of depressions 4 have a relative displacement of p/2 in the direction normal to the flow direction. The spacing between adjacent PCM packs in a stack is indicated by the parameter H, i.e. the height of the airflow passages between the PCT packs 1. The depth of the depression relative to the surface of the PCM pack 1 is indicated by the parameters Hd.

Presently preferred embodiments of the invention have the following ranges of ratios of parameters:
- 0.2 < H/d < 1.5
- 0.1 < Hd/d < 0.3
- 0.25 < d/S < 0.57
- 0.35 < S/p < 2.0

### EXAMPLES

Four dimpled layouts were selected for testing as shown in Figure 6. The spacing between adjacent PCM packs in this example was 8mm. The characteristics of the selected layouts are shown in the below.

| **Layout** | **d** | **Hd** | **S** |
|---|---|---|---|
| Reference | 6.9 mm | 2 mm | 13.9 mm |
| Option 1 | 10 mm | 2.1 mm | 34.6 mm |
| Option 2 | 12 mm | 2.6 mm | 34.7 mm |
| Option 3 | 15 mm | 3.1 mm | 34.6 mm |

For testing purpose the selected dimpled layouts were machined on a single side of 8 mm thick aluminium plates of 450x150mm (Figure 4). A set of two panels for each dimple layout was manufactured to create the dimpled channels. The side edges were sealed with an insert of a purpose made T-profile to set the channel height at the required level (8mm or 10mm). The back of the dimpled plate was attached to a thermoelectric cooling assembly that allowed control of the wall temperature of the cooling channel to the required level. A purpose built test rig was used to evaluate the dimpled channel performance. The test channel was connected to a pressurised chamber via a preconditioning passage with smooth walls. The air temperature in the chamber was regulated with halogen bulbs connected to a PID controller to achieve the required inlet temperature at the test section. The air flow rate was supplied using variable speed DC fans to the pressurised chamber and the rate of flow was measured upstream of the supply fan with a standard inlet cone device. Air temperature and relative humidity were evaluated at both inlet and outlet of the test section. The plate temperature was measured at six different locations with thermocouple probes inserted into 40mm long channels drilled in from the lateral side of the plates. The channels were filled with thermo-conductive paste to ensure good contact between the temperature probes and the body of the dimpled plate.

Each dimple layout was tested at various flow rates to evaluate the thermal performance under different flow regimes. Two sets of measurements were conducted. The first set of measurements was focused on comparing the dimpled layouts against a smooth wall channel, using 8mm channel height. The second round was comparing the best performing dimpled plate with an existing PCM panel. The dimpled channel height was increased to 10mm for the subsequent measurements.

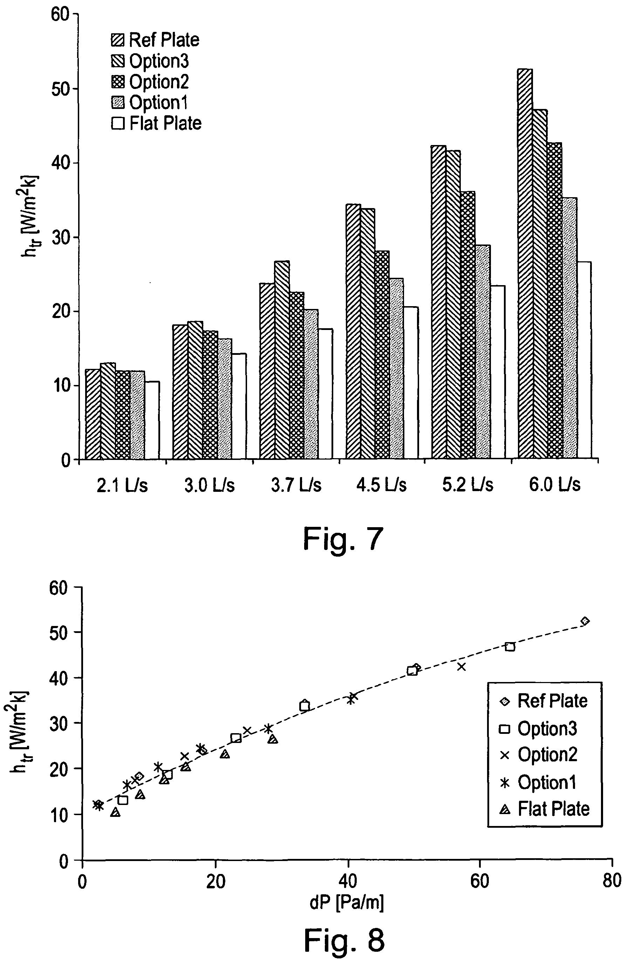

As shown in Figure 7, the heat transfer coefficient (hₜᵣ) of the dimpled plates showed a considerable increment of about 20% compared to the smooth plate in the laminar rage. As the flow regime altered towards a more turbulent range the hₜᵣ in the dimpled channels also increased at a steady rate up to 80 to 90% higher than within the smooth channel. The "Reference" and Option 3 dimples contributed to the highest increment in the heat transfer. Option 2 and Option 3 layouts have also followed the trend of the hₜᵣ improvement, but at a noticeably lower rate.

Figure 8 shows that the heat transfer performance of each panel follows a well defined relationship with the specific pressure loss regardless of design. However, the amount of air (or face velocity) required to achieve a certain heat transfer level at a given pressure may substantially differ between various designs. As an example 25 W/m²K hₜᵣ is achievable with each design at around 20 Pa pressure loss, but the amount of air needed in case of the flat plate may be up to 5.5 l/s while in the case of the Option 3 layout only about 3.5 l/s. Consequently, the dimpled layout can be matched to achieve the desired heat transfer and pressure loss for the amount of air that is supplied through the thermal battery (PCM pack).

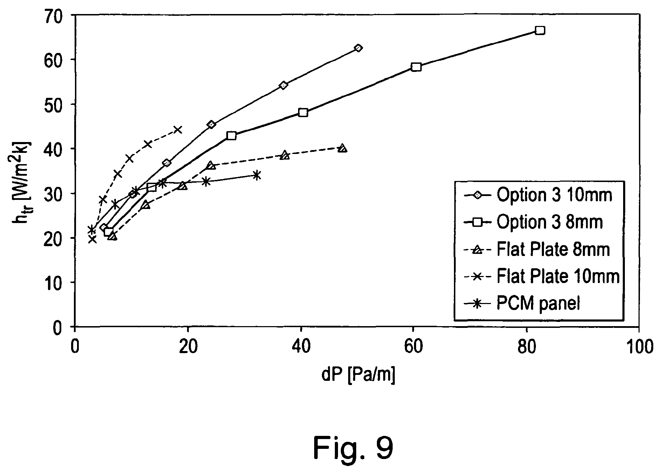

The ambient temperatures during the second set of measurements were considerably cooler at 17 - 20°C. Inlet temperatures were set within the 27 - 30°C range and the channel wall temperatures established between 20 and 23°C. For this set of measurement the 'Option 3' layout was selected as it was performing in the top range compared to the other investigated layouts. The measurements were carried out at both 8mm and 10mm channel height. Furthermore, the flat wall channel was tested as a reference case and a single channel made of 2 PCM panels but of equal width as the dimpled channel (150mm) was also investigated. Figure 9 shows the heat transfer coefficient for each plate against the pressure drop across the channel. As can be seen from Figure 9, the Option 3 configuration had superior heat transfer for a given pressure drop.

In summary, a phase change material (PCM) pack 1 for an air conditioning system comprises phase change material sealed between a first thermally conductive layer 2 forming a first outer surface of the PCM pack and a second thermally conductive layer 2 forming a second outer surface of the PCM pack. At least the first or second outer surface of the PCM pack takes the form of a substantially planar surface having defined therein a plurality of depressions 4 deviating from the planar surface towards the interior of the PCM pack in a direction perpendicular to the planar surface. The depressions improve heat transfer between the pack and an airflow passing over the surface of the PCM pack.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A phase change material PCM pack (1) for an air conditioning system, the pack comprising phase change material sealed between a first thermally conductive layer (2) forming a first outer surface of the PCM pack and a second thermally conductive layer (2) forming a second outer surface of the PCM pack, wherein at least the first or second outer surface of the PCM pack takes the form of a substantially planar surface, **characterized in that** said at least first or second outer surface of the PCM pack having defined therein a plurality of depressions (4) deviating from the planar surface towards the interior of the PCM pack (1) in a direction perpendicular to the planar surface.

2. A PCM pack (1) as claimed in claim 1, wherein both the first and second outer surfaces of the PCM pack (1) each take the form of a substantially planar surface having defined therein a plurality of depressions (4) deviating from the planar surface towards the interior of the PCM pack (1) in a direction perpendicular to the planar surface.

3. A PCM pack (1) as claimed in claim 1 or 2, wherein the plurality of depressions (4) is arranged in a regular array over the outer surface.

4. A PCM pack (1) as claimed in any preceding claim, wherein each outer surface of the pack provided with said depressions (4) comprises at least ten depressions (4).

5. A PCM pack (1) as claimed in any preceding claim, wherein the depressions (4) occupy more than 15% of the planar surface area of the outer surface provided with said depressions.

6. A PCM pack (1) as claimed in any preceding claim, wherein the planar surface area of the outer surface occupied by each depression (4) is less than 5% of the total planar surface area of the outer surface.

7. A PCM pack (1) as claimed in any preceding claim, wherein the maximum depth of each depression (4) in the direction perpendicular to the planar surface of the PCM pack is less than 75% of the square root of the planar surface area of the outer surface occupied by the depression (4).

8. A PCM pack as claimed in any preceding claim, wherein the maximum depth of each depression (4) in the direction perpendicular to the planar surface of the PCM pack is greater than 10% of the square root of the planar surface area of the outer surface occupied by the depression.

9. A PCM pack as claimed in any preceding claim, wherein the cross section of each depression (4) in a plane perpendicular to the planar surface of the pack forms a smooth curve.

10. A PCM pack (1) as claimed in any preceding claim, wherein the depressions (4) have a substantially circular shape in the plane of the planar outer surface.

11. A PCM pack (1) as claimed in any preceding claim, wherein the depressions (4) are defined by a substantially spherical surface.

12. A PCM pack (1) as claimed in any preceding claim, wherein the phase change material comprises at least one of a salt hydrate, urea or paraffin.

13. A PCM pack (1) as claimed in any preceding claim, wherein the phase change material has a melting point in the range -5 to 35 degrees centigrade.

14. A PCM pack (1) as claimed in any preceding claim, wherein the thermally conductive material comprises aluminium or stainless steel.

15. A PCM pack (1) as claimed in any preceding claim, wherein the thermally conductive material comprises a metal-plastics composite.

16. An air conditioning system comprising a plurality of PCM packs (1) as claimed in any preceding claim arranged in a stack with spacing between adjacent packs to allow air flow over the outer surface of each pack.

17. An air conditioning system as claimed in claim 16, wherein the maximum depth of each depression (4) in the direction perpendicular to the planar surface of each PCM pack is less than 75% of the spacing between adjacent packs.

18. An air conditioning system as claimed in claim 16 or 17, wherein the maximum depth of each depression (4) in the direction perpendicular to the planar surface of each PCM pack (1) is greater than 25% of the spacing between adjacent packs.

## Patentansprüche

1. Phasenwechselmaterial-Packung (PCM für Phase Change Material) (1) für eine Klimaanlage, wobei die Packung Phasenwechselmaterial umfasst, das zwischen einer ersten wärmeleitfähigen Schicht (2), die eine erste äußere Oberfläche der PCM-Packung bildet, und einer zweiten wärmeleitfähigen Schicht (2), die eine zweite äußere Oberfläche der PCM-Packung bildet, versiegelt ist, wobei wenigstens die erste oder zweite äußere Oberfläche der PCM-Packung die Form einer im Wesentlichen planaren Oberfläche annimmt, **dadurch gekennzeichnet, dass** die genannte wenigstens erste oder zweite äußere Oberfläche der PCM-Packung darin definiert eine Mehrzahl von Vertiefungen (4) aufweist, die von der planaren Oberfläche in eine senkrecht zu der planaren Oberfläche verlaufenden Richtung in Richtung des Inneren der PCM-Packung (1) abweichen.

2. PCM-Packung (1) nach Anspruch 1, wobei sowohl die erste als auch die zweiten äußere Oberfläche der PCM-Packung (1) jeweils die Form einer im Wesentlichen planaren Oberfläche annehmen, mit einer darin definierten Mehrzahl von Vertiefungen (4), die von der planaren Oberfläche in eine senkrecht zu der planaren Oberfläche verlaufenden Richtung in Richtung des Inneren der PCM-Packung (1) abweichen.

3. PCM-Packung (1) nach Anspruch 1 oder 2, wobei die Mehrzahl von Vertiefungen (4) in einer regelmäßigen Anordnung über der äußeren Oberfläche angeordnet ist.

4. PCM-Packung (1) nach einem der vorstehenden Ansprüche, wobei jede äußere Oberfläche der Packung, die mit den genannten Vertiefungen versehen ist, wenigstens zehn Vertiefungen (4) umfasst.

5. PCM-Packung (1) nach einem der vorstehenden Ansprüche, wobei die Vertiefungen (4) mehr als 15% des planaren Oberflächenbereichs der mit den genannten Vertiefungen versehenen äußeren Oberfläche belegen.

6. PCM-Packung (1) nach einem der vorstehenden Ansprüche, wobei der durch jede Vertiefung (4) belegte planare Oberflächenbereich der äußeren Oberfläche kleiner ist als 5% des planaren Oberflächenbereichs insgesamt der äußeren Oberfläche.

7. PCM-Packung (1) nach einem der vorstehenden Ansprüche, wobei die maximale Tiefe jeder Vertiefung (4) in die senkrecht zu der planaren Oberfläche der PCM-Packung verlaufende Richtung kleiner ist als 75% der Quadratwurzel des planaren Oberflächenbereichs der durch die Vertiefung (4) belegten äußeren Oberfläche.

8. PCM-Packung nach einem der vorstehenden Ansprüche, wobei die maximale Tiefe jeder Vertiefung (4) in die senkrecht zu der planaren Oberfläche der PCM-Packung verlaufende Richtung größer ist als 10% der Quadratwurzel des planaren Oberflächenbereichs der durch die Vertiefung belegten äußeren Oberfläche.

9. PCM-Packung nach einem der vorstehenden Ansprüche, wobei der Querschnitt jeder Vertiefung (4) in eine senkrecht zu der planaren Oberfläche der Packung verlaufenden Ebene eine glatte Kurve bildet.

10. PCM-Packung (1) nach einem der vorstehenden Ansprüche, wobei die Vertiefungen (4) in der Ebene der planaren äußeren Oberfläche eine im Wesentlichen runde Form aufweisen.

11. PCM-Packung (1) nach einem der vorstehenden Ansprüche, wobei die Vertiefungen (4) durch eine im Wesentlichen sphärische Oberfläche definiert sind.

12. PCM-Packung (1) nach einem der vorstehenden Ansprüche, wobei das Phasenwechselmaterial wenigstens eines von Salzhydrat, Harnstoff oder Paraffin umfasst.

13. PCM-Packung (1) nach einem der vorstehenden Ansprüche, wobei das Phasenwechselmaterial einen Schmelzpunkt im Bereich von -5 bis 35°C aufweist.

14. PCM-Packung (1) nach einem der vorstehenden Ansprüche, wobei das wärmeleitfähige Material Aluminium oder Edelstahl umfasst.

15. PCM-Packung (1) nach einem der vorstehenden Ansprüche, wobei das wärmeleitfähige Material einen Metall-Kunststoff-Verbundwerkstoff umfasst.

16. Klimaanlage, die eine Mehrzahl von PCM-Packungen (1) nach einem der vorstehenden Ansprüche umfasst, die in einem Stapel angeordnet sind, mit Zwischenabstand zwischen benachbarten Packungen, um eine Luftströmung über die äußere Oberfläche jeder Packung zu ermöglichen.

17. Klimaanlage nach Anspruch 16, wobei die maximale Tiefe jeder Vertiefung (4) in die senkrecht zu der planaren Oberfläche jeder PCM-Packung verlaufende Richtung kleiner ist als 75% des Zwischenabstands zwischen benachbarten Packungen.

18. Klimaanlage nach Anspruch 16 oder 17, wobei die maximale Tiefe jeder Vertiefung (4) in die senkrecht zu der planaren Oberfläche jeder PCM-Packung verlaufende Richtung größer ist als 25% des Zwischenabstands zwischen benachbarten Packungen.

## Revendications

1. Ensemble matériau à changement de phase PCM (1) destiné à un système de climatisation, l'ensemble comprenant un matériau à changement de phase scellé entre une première couche thermoconductrice (2) formant une première surface externe de l'ensemble PCM et une seconde couche thermoconductrice (2) formant une seconde surface externe de l'ensemble PCM, la première et/ou la seconde surface externe de l'ensemble PCM prenant la forme d'une surface sensiblement plane, **caractérisé en ce qu'**il est défini dans ladite première et/ou seconde surface externe de l'ensemble PCM une pluralité de dépressions (4) s'écartant de la surface plane vers l'intérieur de l'ensemble PCM (1) dans une direction perpendiculaire à la surface plane.

2. Ensemble PCM (1) selon la revendication 1, les première et seconde surfaces externes de l'ensemble PCM (1) prenant chacune la forme d'une surface sensiblement plane dans laquelle est définie une pluralité de dépressions (4) s'écartant de la surface plane vers l'intérieur de l'ensemble PCM (1) dans une direction perpendiculaire à la surface plane.

3. Ensemble PCM (1) selon la revendication 1 ou 2, la pluralité de dépressions (4) étant disposée dans une matrice régulière sur la surface externe.

4. Ensemble PCM (1) selon l'une quelconque des revendications précédentes, chaque surface externe de l'ensemble comportant lesdites dépressions (4) comprenant au moins dix dépressions (4).

5. Ensemble PCM (1) selon l'une quelconque des revendications précédentes, les dépressions (4) occupant plus de 15 % de la surface plane de la surface externe comprenant lesdites dépressions.

6. Ensemble PCM (1) selon l'une quelconque des revendications précédentes, la surface plane de la surface externe occupée par chaque dépression (4) représentant moins de 5 % de la superficie plane totale de la surface externe.

7. Ensemble PCM (1) selon l'une quelconque des revendications précédentes, la profondeur maximale de chaque dépression (4) dans la direction perpendiculaire à la surface plane de l'ensemble PCM étant inférieure à 75 % de la racine carrée de la surface plane de la surface externe occupée par la dépression (4).

8. Ensemble PCM selon l'une quelconque des revendications précédentes, la profondeur maximale de chaque dépression (4) dans la direction perpendiculaire à la surface plane de l'ensemble PCM étant supérieure à 10 % de la racine carrée de la surface plane de la surface externe occupée par la dépression.

9. Ensemble PCM selon l'une quelconque des revendications précédentes, la section transversale de chaque dépression (4) dans un plan perpendiculaire à la surface plane de l'ensemble formant une courbe lisse.

10. Ensemble PCM (1) selon l'une quelconque des revendications précédentes, les dépressions (4) ayant une forme sensiblement circulaire dans le plan de la surface externe plane.

11. Ensemble PCM (1) selon l'une quelconque des revendications précédentes, les dépressions (4) étant définies par une surface sensiblement sphérique.

12. Ensemble PCM (1) selon l'une quelconque des revendications précédentes, le matériau à changement de phase comprenant un sel hydraté, de l'urée et/ou de la paraffine.

13. Ensemble PCM (1) selon l'une quelconque des revendications précédentes, le matériau à changement de phase ayant un point de fusion dans la plage comprise entre -5 et 35 degrés centigrades.

14. Ensemble PCM (1) selon l'une quelconque des revendications précédentes, le matériau thermoconducteur comprenant de l'aluminium ou de l'acier inoxydable.

15. Ensemble PCM (1) selon l'une quelconque des revendications précédentes, le matériau thermiquement conducteur comprenant un composite métal-plastique.

16. Système de climatisation comprenant une pluralité d'ensembles PCM (1) selon l'une quelconque des revendications précédentes disposée dans une pile avec un espacement entre les ensembles adjacents pour permettre l'écoulement de l'air sur la surface externe de chaque ensemble.

17. Système de climatisation selon la revendication 16, la profondeur maximale de chaque dépression (4) dans la direction perpendiculaire à la surface plane de chaque ensemble PCM étant inférieure à 75 % de l'espacement entre ensembles adjacents.

18. Système de climatisation selon la revendication 16 ou 17, la profondeur maximale de chaque dépression (4) dans la direction perpendiculaire à la surface plane de chaque ensemble PCM (1) étant supérieure à 25 % de l'espacement entre ensembles adjacents.
